# FASCICULE DE BREVET EUROPEEN

(11) **EP 1 741 955 B1**
(45) Date de publication et mention de la délivrance du brevet: **23.04.2008**
(21) Numéro de dépôt: 06300744.7
(22) Date de dépôt: 03.07.2006
(51) Int. Cl.: F16H 3/12

(54) **Boîte de vitesses**
Getriebe
Gearbox

(30) Priorité: 08.07.2005 FR 0507352
(43) Date de publication de la demande: 10.01.2007
(73) Titulaire: Peugeot Citroen Automobiles SA, 78943 Vélizy-Villacoublay Cedex (FR)
(72) Inventeur: Lelasseux, Xavier, 92150 Suresnes (FR)

(56) Documents cités:
- EP-A- 1 067 318
- WO-A-00/75532
- DE-A1- 10 101 862
- US-A- 3 399 580

## Description

La présente invention concerne une boîte de vitesses du type comprenant :
- un premier arbre portant un premier pignon monté mobile en rotation autour de ce premier arbre,
- un second arbre portant un second pignon engrené avec le premier pignon, et
- un crabot pouvant prendre une position engagée bloquant la rotation du premier pignon par rapport au premier arbre, et une position désengagée laissant libre la rotation du premier pignon par rapport au premier arbre.

Une telle boîte de vitesses est connue du document US 3399580.

Elle s'applique notamment pour les boîtes de vitesses des véhicules automobiles.

Une boîte de vitesses permet la sélection d'un rapport d'accouplement entre un arbre moteur, entraîné par le moteur du véhicule, et un arbre récepteur, relié aux roues du véhicule.

Dans une boîte de vitesses dite à crabot, l'arbre moteur est muni d'un pignon solidaire de cet arbre, tandis que l'arbre récepteur porte un pignon récepteur monté mobile en rotation. Un crabot disposé sur l'arbre récepteur et piloté par exemple par un levier de vitesses, permet de bloquer la rotation du pignon récepteur par rapport à l'arbre récepteur, et ainsi d'accoupler les deux arbres suivant le rapport des deux pignons.

Afin de faciliter l'engagement du crabot, il est connu d'utiliser un synchroniseur. Un synchroniseur comprend de manière classique deux parties, respectivement solidaires du pignon récepteur et du crabot, amenées en contact l'une de l'autre avant l'engagement du crabot de manière à synchroniser les vitesses de rotation relatives du pignon récepteur avec le crabot, c'est-à-dire avec l'arbre récepteur.

Ainsi, avec un tel dispositif, la synchronisation comporte une phase d'approche des deux parties du synchroniseur, une phase de mise en contact, dite « phase d'essorage », la phase de synchronisation proprement dite, c'est-à-dire de frottement des deux parties l'une sur l'autre, puis une phase d'écartement des parties précédant l'engagement du crabot. L'ensemble de ces phases dure généralement 100 millisecondes.

L'invention vise à réduire ce temps de synchronisation.

A cet effet, l'invention concerne une boîte de vitesses du type précité, caractérisée en ce que le second pignon est monté mobile en rotation autour du second arbre, et en ce qu'elle comprend :
- un premier élément de frottement solidaire en rotation du second pignon et présentant une première surface de frottement,
- un second élément de frottement solidaire en rotation du second arbre et présentant une seconde surface de frottement, et
- des moyens de maintien des première et seconde surfaces de frottement constamment en relation de frottement l'une avec l'autre de manière à synchroniser les vitesses de rotation relatives du second pignon et du second arbre lorsque le crabot est engagé.

Grâce à l'invention, les phases d'approche des éléments de frottement, de mise en contact et d'écartement sont supprimées, ce qui permet de réduire la durée de synchronisation à 40 millisecondes.

En outre, le bruit généré par la mise en contact des éléments de frottement de l'état de la technique est évité. La nuisance sonore du passage de vitesse est donc réduite.

Une boîte de vitesses selon l'invention peut en outre comporter l'une ou plusieurs des caractéristiques suivantes :
- les première et seconde surfaces de frottement sont en contact direct l'une avec l'autre ;
- les première et seconde surfaces de frottement sont tronconiques et coaxiales avec l'axe du second arbre ;
- la première surface de frottement est orientée à l'opposé de l'axe du second arbre, tandis que la seconde surface de frottement est orientée vers cet axe ;
- chacune des surfaces de frottement a une projection sur un plan géométrique perpendiculaire à l'axe du second arbre non nulle ;
- les moyens de maintien comportent un ressort ;
- le ressort s'étend parallèlement à l'axe du second arbre, les moyens de maintien comprennent au moins une bille de maintien de l'un des éléments de frottement contre l'autre élément de frottement et une pièce de retenue solidaire du second arbre en translation axiale dans la direction opposée au ressort, et le ressort est comprimé entre la ou chaque bille et la pièce de retenue ;
- elle comprend un moyeu monté coulissant sur le second arbre et présentant une surface de transmission axiale d'effort ayant un profil axial en rampe orienté vers la pièce de retenue, la pièce de retenue présente une surface de guidage axial de la ou chaque bille, et la ou chaque une bille est au contact des surfaces de guidage et de transmission d'effort ;
- les premier et second pignons comportent des dentures hélicoïdales complémentaires orientées de manière à générer un effort axial repoussant le premier élément de frottement contre le second élément de frottement.

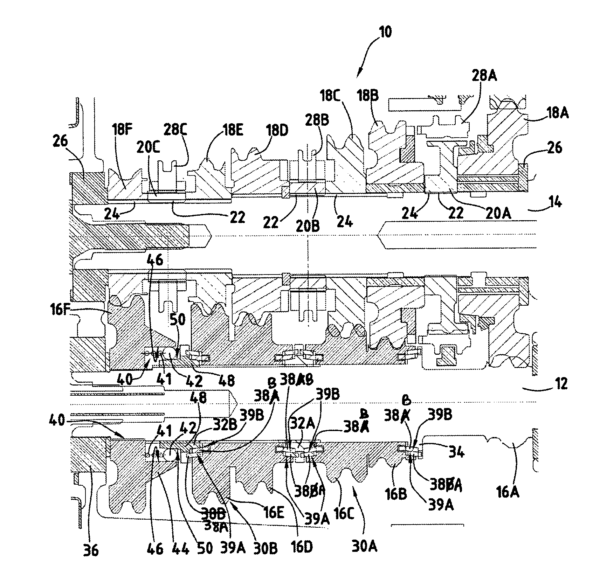

L'invention sera mieux comprise à l'aide de la description qui va suivre, donnée uniquement à titre d'exemple et faite en se référant à la figure unique représentant une vue en coupe d'une boîte de vitesses selon l'invention.

La boîte de vitesses, désignée sur la figure unique par la référence générale 10, est une boîte à six vitesses. Elle comprend un arbre moteur 12 et un arbre récepteur 14, s'étendant parallèlement l'un par rapport à l'autre.

Chacun des arbres moteur 12 et récepteur 14 porte six pignons, ordonnés suivant leur taille. La taille des pignons portés par l'arbre moteur 12, dits pignons moteurs 16A à 16F, va croissante depuis le pignon moteur de première 16A jusqu'au pignon moteur de sixième 16F. A l'inverse, la taille des pignons portés par l'arbre récepteur 14, dits pignons récepteurs 18A à 18F, va décroissante depuis le pignon récepteur de première 18A jusqu'au pignon récepteur de sixième 18F. Les deux pignons moteur et récepteur correspondants à chaque vitesse, sont engrenés l'un avec l'autre.

Plus précisément, les pignons récepteurs 18A à 18F sont enfilés sur l'arbre récepteur 14 dans l'ordre les uns à la suite des autres, avec trois moyeux 20A, 20B et 20C intercalés respectivement entre le pignon de première 18A et le pignon de deuxième 18B, entre le pignon de troisième 18C et le pignon de quatrième 18D, et entre le pignon de cinquième 18E et le pignon de sixième 18F.

Chacun des pignons récepteurs 18A à 18F est mobile en rotation autour de l'arbre récepteur 14, tandis que les moyeux 20A, 20B et 20C sont rendus solidaires en rotation de cet arbre. A cet effet, chaque moyeu 20A, 20B et 20C comporte des nervures 22 engagées dans des rainures axiales 24 ménagées dans l'arbre récepteur 14.

L'empilement constitué des pignons récepteurs 18A à 18F et des moyeux 20A, 20B et 20C est enserré à chaque extrémité par deux butées 26 prévenant le glissement axial des pignons récepteurs 18A à 18F et des moyeux 20A, 20B et 20C le long de l'arbre récepteur 14. Les moyeux 20A, 20B et 20C portés par l'arbre récepteur 14 sont ainsi appelés par la suite moyeux fixes.

Chacun des moyeux fixes 20A, 20B et 20C porte un crabot 28A, 28B, 28C, mobile uniquement en translation axiale par rapport à ce moyeu fixe 20A, 20B et 20C. Le crabot 28A, 28B, 28C est destiné à s'engager avec chacun des pignons récepteurs entourant le moyeu fixe le portant. En position engagée, le crabot 28A, 28B, 28C bloque la rotation du pignon récepteur par rapport à l'arbre récepteur.

Le crabot 28A, 28B, 28C peut également prendre une position désengagée, qui est la position représentée sur la figure unique, laissant libre la rotation de chaque pignon récepteur l'entourant par rapport à l'arbre récepteur 14.

Le pignon moteur de première 16A est venu de matière avec l'arbre récepteur 12. Il est donc totalement solidaire de ce dernier.

Les autres pignons moteurs 16B à 16F sont montés sur l'arbre récepteur 14 d'une manière semblable à ce qui a été décrit pour les pignons récepteurs 18A à 18F et l'arbre récepteur 14.

Les pignons moteurs de seconde 16B et de troisième 16C sont venus de matière l'un avec l'autre et constituent donc une seule et même pièce, appelée premier ensemble de pignons moteurs 30A. De même, les pignons de quatrième 16D et de cinquième 16E forment une seule pièce, appelée second ensemble de pignons moteurs 30B.

Les deux ensembles de pignons moteurs 30A et 30B et le pignon moteur de sixième 16F sont enfilés dans l'ordre sur l'arbre moteur 12, avec deux moyeux 32A et 32B intercalés respectivement entre les deux ensembles de pignons moteurs 30A et 30B et entre le second ensemble de pignons moteurs 30B et le pignon moteur de sixième 16F. Ces moyeux 32A, 32B sont appelés par la suite moyeux mobiles 32A, 32B car ils peuvent se déplacer axialement le long de l'arbre moteur 12, pour compenser l'usure de certaines pièces comme cela est expliqué plus loin.

L'empilement ainsi constitué est retenu, du côté du second pignon moteur 16B, par une bague 34 portée par l'arbre moteur 12 et venue de matière avec ce dernier, et, de l'autre côté, par une pièce de butée 36.

Les pignons moteurs 16B à 16F sont tous montés mobiles en rotation autour de l'arbre moteur 12, tandis que les moyeux mobiles 32A, 32B sont bloqués en rotation autour de ce même arbre de la même manière que pour les moyeux fixes 20A, 20B, 20C.

Un premier élément de frottement 38A est fixé de manière solidaire en rotation sur chacun des côtés, dans la direction axiale, de chacun des ensembles de pignons moteurs 30A, 30B. Ces premiers éléments de frottement 38A sont constitués de cônes tronqués d'axe correspondant à l'axe de l'arbre moteur 12. Chaque cône de frottement est orienté de manière à s'évaser en s'éloignant de l'ensemble de pignons moteurs 30A à 30B sur lequel il est fixé. Chaque premier élément de frottement 38A présente une surface de frottement 39A, qui est la face extérieure du cône, c'est-à-dire la face orientée à l'opposé de l'axe du second arbre 12.

Les pièces entourant chacun des ensembles de pignons moteurs, c'est-à-dire selon le cas la bague 34 ou les moyeux mobiles 32A, 32B, portent des seconds éléments de frottement 38B, complémentaires de ceux portés par les ensembles de pignons moteurs 30A, 30B. Ces seconds éléments de frottement 38B sont également constitués de cônes tronqués d'axe correspondant à l'axe de l'arbre moteur 12. Chaque second élément de frottement 38B présente une surface de frottement 39B, qui est la face interne du cône, c'est-à-dire la face orientée vers l'axe du second arbre 12.

Les première et seconde surfaces de frottement 39A, 39B sont ainsi tronconiques et coaxiales avec l'axe du second arbre 12 et leur projection sur un plan géométrique perpendiculaire à cet axe est non nulle, ce qui signifie qu'elles sont en prise axialement.

Le premier élément de frottement 38A est imbriqué dans le second élément de frottement 38B de manière que les première et seconde surfaces de frottement 39A, 39B soient constamment maintenues en relation de frottement l'une avec l'autre en étant en contact direct.

La boîte de vitesses 10 est configurée pour maintenir ce contact, à la fois en cas de passage d'un couple moteur depuis l'arbre moteur 12 vers l'arbre récepteur 14, et en cas d'usure des éléments de frottement.

Dans le premier cas, les pignons moteur et récepteur correspondants à chaque vitesse comportent des dentures hélicoïdales complémentaires orientées de manière à générer un effort axial repoussant le premier élément de frottement 38A contre le second élément de frottement 38B.

Dans le second cas, la boîte de vitesses 10 comporte des moyens 40 pour repousser les moyeux mobiles 32A, 32B et les ensembles de pignons moteurs 30A, 30B contre la bague 34 de l'arbre moteur 12, afin de maintenir les première et seconde surfaces de frottement 39A, 39B constamment en contact l'une avec l'autre.

Ces moyens de maintien 40 comportent un ressort 41 enroulé autour du second arbre 12 et s'étendant donc parallèlement à l'axe du second arbre 12, et un ensemble de billes 42 disposées circulairement autour de l'arbre moteur 12. Ils comportent également une pièce de retenue constituée par le pignon de sixième 16F, solidaire du second arbre 12 en translation axiale dans la direction opposée au ressort 41 grâce à la butée 36, le ressort 41 étant comprimé entre chacune des billes 42 et cette pièce de retenue 16F.

Le pignon de sixième 16F porte une collerette circulaire 44 dirigée vers le second ensemble de pignons 30B, en forme de cylindre creux coaxial à l'arbre moteur 12. La paroi intérieure de la collerette constitue une surface de guidage axial 46 des billes 42.

Par ailleurs, le moyeu 32A porte un cône tronqué 48, s'évasant en direction de ce moyeu 32A. La surface externe du cône tronqué 48 constitue une surface 50 de transmission axiale d'effort ayant un profil axial en rampe orienté vers le pignon de sixième 16F, s'étendant en vis-à-vis de la surface de guidage 46. Chacune des billes s'appuie sur la surface de transmission d'effort 50.

Ainsi, par effet de rampe, les billes 42 transmettent l'effort axial repoussant les moyeux mobiles 32A et 32B et les ensembles de pignons moteurs 30A, 30B contre la bague 34 de l'arbre moteur 12. L'effort du ressort 41 est donc transmis axialement à chaque élément de frottement d'une paire le plus proche de la surface de transmission 50.

Les billes 42 et le ressort 41 permettent donc de compenser l'usure des cônes de frottement 38A, 38B en déplaçant axialement les ensembles de pignons moteurs 30A, 30B et les moyeux mobiles 32A, 32B. De plus, ils permettent d'appliquer une précharge prédéterminée sur les cônes de frottement 38A, 38B.

Le fonctionnement de la boîte de vitesses 10 de la figure unique va à présent être décrit.

Pour changer de vitesse, l'arbre moteur 12 est tout d'abord débrayé, ce qui signifie qu'il est libre et n'est plus entraîné en rotation par le moteur du véhicule.

Les crabots 28A, 28B et 28C sont alors amenés en position désengagée. Cette position représentée sur la figure unique est communément appelée « point mort » de la boîte de vitesses 20.

Dans cette configuration, les pignons moteurs 16A à 16F sont entraînés par l'arbre moteur, grâce à la précharge exercée sur les éléments de frottement pour les cinq derniers. Les pignons moteurs 16A à 16F ainsi entraînés font tourner les pignons récepteurs 18A à 18F, tous libres en rotation autour de l'axe récepteur 14.

Le passage de la première vitesse et de la sixième vitesse, dans l'exemple illustré, se fait par crabotage simple.

Par contre, l'engagement de la deuxième, troisième, quatrième ou cinquième vitesse se fait de manière différente. En effet, le crabot 28A, 28B ou 28C correspondant est amené en position engagée, et s'engage de manière « violente » avec le pignon récepteur correspondant 18B, 18C, 18D ou 18E. Au moment de cet engagement, l'arbre récepteur 14 transmet un couple, résultant de l'entraînement des roues du véhicule, vers l'arbre moteur 12 débrayé.

Ce couple provoque la mise en glissement relatif des première et seconde surfaces de frottement 38A, 38B.

II s'en suit une phase de synchronisation des vitesses relatives du pignon moteur sélectionné par le crabot et de l'arbre moteur, du fait du glissement relatif des première et seconde surfaces de frottement 39A, 39B. A la fin de la synchronisation, l'arbre moteur 12 tourne à la même vitesse que le pignon moteur 16B, 16C, 16D ou 16E.

Le passage de la vitesse est suivi d'un rembrayage au cours duquel l'arbre moteur 12 est de nouveau relié au moteur du véhicule. Le rembrayage entraîne l'apparition d'un couple moteur depuis l'arbre moteur 12 vers l'arbre récepteur 14.

Ce couple moteur est généralement suffisamment important pour provoquer à nouveau le glissement relatif des premier et second éléments de frottement 37A, 38B, qui cette fois n'est pas désiré, puisqu'il empêcherait le passage du couple vers l'arbre récepteur 14.

Ce glissement intempestif est donc prévenu par la présence des dentures hélicoïdales orientées judicieusement comme décrit précédemment.

D'après la description précédente, l'invention réduit bien le temps de synchronisation lors d'un passage de vitesses, puisqu'il n'y a plus de déplacement des éléments de frottement.

## Revendications

1. Boîte de vitesses (10) du type comprenant :
- un premier arbre (14) portant un premier pignon (18B ... 18E) monté mobile en rotation autour de ce premier arbre (14),
- un second arbre (12) portant un second pignon (16B ... 16E) engrené avec le premier pignon (18B ... 18E), et
- un crabot (28A, 28B, 28C) pouvant prendre une position engagée bloquant la rotation du premier pignon (18B ... 18E) par rapport au premier arbre (14), et une position désengagée laissant libre la rotation du premier pignon (18B ... 18E) par rapport au premier arbre (14),
**caractérisée en ce que** le second pignon (16B ... 16E) est monté mobile en rotation autour du second arbre (12), et **en ce qu'**elle comprend :
- un premier élément de frottement (38A) solidaire en rotation du second pignon (16B ... 16E) et présentant une première surface de frottement (39A),
- un second élément de frottement (38B) solidaire en rotation du second arbre (12) et présentant une seconde surface de frottement (39B), et
- des moyens (40) de maintien des première et seconde surfaces de frottement (39A, 39B) constamment en relation de frottement l'une avec l'autre de manière à synchroniser les vitesses de rotation relatives du second pignon (16B ... 16E) et du second arbre (12) lorsque le crabot (28A, 28B, 28C) est engagé.

2. Boîte de vitesses (10) selon la revendication 1, **caractérisée en ce que** les première et seconde surfaces de frottement (39A, 39B) sont en contact direct l'une avec l'autre.

3. Boîte de vitesses (10) selon la revendication 2, **caractérisée en ce que** les première et seconde surfaces de frottement (39A, 39B) sont tronconiques et coaxiales avec l'axe du second arbre (12).

4. Boîte de vitesses (10) selon la revendication 3, **caractérisée en ce que** la première surface de frottement (39A) est orientée à l'opposé de l'axe du second arbre (12), tandis que la seconde surface de frottement (39B) est orientée vers cet axe.

5. Boîte de vitesses (10) selon l'une quelconque des revendications 1 à 4, **caractérisée en ce que** chacune des surfaces de frottement (39A, 39B) a une projection sur un plan géométrique perpendiculaire à l'axe du second arbre (12) non nulle.

6. Boîte de vitesses (10) selon l'une quelconque des revendications 1 à 5, **caractérisée en ce que** les moyens de maintien (40) comportent un ressort (41 ).

7. Boîte de vitesses (10) selon les revendications 5 et 6 prises ensembles, **caractérisée en ce que** :
- le ressort (41) s'étend parallèlement à l'axe du second arbre (12),
- les moyens de maintien (40) comprennent au moins une bille (42) de maintien de l'un des éléments de frottement contre l'autre élément de frottement et une pièce de retenue (16F) solidaire du second arbre (12) en translation axiale dans la direction opposée au ressort (41), et
- le ressort (41) est comprimé entre la ou chaque bille (42) et la pièce de retenue (16F).

8. Boîte de vitesses (10) selon la revendication 7, **caractérisée en ce que** :
- elle comprend un moyeu (32B) monté coulissant sur le second arbre (12) et présentant une surface (50) de transmission axiale d'effort ayant un profil axial en rampe orienté vers la pièce de retenue (16F),
- la pièce de retenue (16F) présente une surface (46) de guidage axial de la ou chaque bille (42), et
- la ou chaque une bille (42) est au contact des surfaces de guidage (46) et de transmission d'effort (50).

9. Boîte de vitesses selon l'une quelconque la revendication 5 et l'une quelconque des revendications 6 à 8, **caractérisée en ce que** les premier et second pignons (16B ... 16E, 18B ... 18E) comportent des dentures hélicoïdales complémentaires orientées de manière à générer un effort axial repoussant le premier élément de frottement (38A) contre le second élément de frottement (38B).

## Claims

1. Gearbox (10) of the type comprising:
- a first shaft (14) carrying a first gear (18B ... 18E) mounted rotatably about this first shaft (14),
- a second shaft (12) carrying a second gear (16B ... 16E) meshing with the first gear (18B ... 18E), and
- a dog clutch (28A, 28B, 28C) which can assume an engaged position blocking the rotation of the first gear (18B ... 18E) with respect to the first shaft (14), and a disengaged position allowing the free rotation of the first gear (18B ... 18E) with respect to the first shaft (14),
**characterized in that** the second gear (16B ... 16E) is mounted rotatably about the second shaft (12), and **in that** it comprises:
- a first friction element (38A) coupled in rotation with the second gear (16B ... 16E) and having a first friction surface (39A),
- a second friction element (38B) coupled in rotation with the second shaft (12) and having a second friction surface (39B), and
- means (40) for retaining the first and second friction surfaces (39A, 39B) constantly in a frictional relationship with one another so as to synchronize the relative speeds of rotation of the second gear (16B ... 16E) and of the second shaft (12) when the dog clutch (28A, 28B, 28C) is engaged.

2. Gearbox (10) according to Claim 1, **characterized in that** the first and second friction surfaces (39A, 39B) are in direct contact with one another.

3. Gearbox (10) according to Claim 2, **characterized in that** the first and second friction surfaces (39A, 39B) are frustoconical and coaxial with the axis of the second shaft (12).

4. Gearbox (10) according to Claim 3, **characterized in that** the first friction surface (39A) is oriented away from the axis of the second shaft (12), while the second friction surface (39B) is oriented towards this axis.

5. Gearbox (10) according to any one of Claims 1 to 4, **characterized in that** each of the friction surfaces (39A, 39B) has a projection onto a geometric plane perpendicular to the axis of the second shaft (12) that is non-zero.

6. Gearbox (10) according to any one of Claims 1 to 5, **characterized in that** the retaining means (40) comprise a spring (41).

7. Gearbox (10) according to Claims 5 and 6 taken together, **characterized in that**:
- the spring (41) extends parallel to the axis of the second shaft (12),
- the retaining means (40) comprise at least one ball (42) for retaining one of the friction elements against the other friction element, and a retaining part (16F) secured to the second shaft (12) against axial translation in the direction away from the spring (41), and
- the spring (41) is compressed between the or each ball (42) and the retaining part (16F).

8. Gearbox (10) according to Claim 7, **characterized in that**:
- it comprises a hub (32B) mounted slidably on the second shaft (12) and having an axial force-transmission surface (50) with a ramp-shaped axial profile oriented towards the retaining part (16F),
- the retaining part (16F) has an axial guiding surface (46) for the or each ball (42), and
- the or each ball (42) is in contact with the guide surface (46) and force-transmission surface (50).

9. Gearbox according to Claim 5 and any one of Claims 6 to 8, **characterized in that** the first and second gears (16B ... 16E, 18B ... 18E) comprise complementary helical sets of teeth oriented so as to generate an axial force pushing the first friction element (38A) against the second friction element (38B).

## Patentansprüche

1. Schaltgetriebe (10) von dem Typ, der aufweist:
- eine erste Welle (14), die ein erstes Zahnrad (18B ... 18E) trägt, das drehbeweglich um diese erste Welle (14) montiert ist,
- eine zweite Welle (12), die ein zweites Zahnrad (16B ... 16E) trägt, das mit dem ersten Zahnrad (18B ... 18E) verzahnt ist, und
- eine Kupplungsklaue (28A, 28B, 2BC) die eine eingerückte Stellung, die die Drehung des ersten Zahnrads (18B ... 18E) bezüglich der ersten Welle (14) blockiert, und eine ausgerückte Stellung einnehmen kann, die die Drehung des ersten Zahnrads (18B ... 18E) bezüglich der ersten Welle (14) freigibt,
**dadurch gekennzeichnet, dass** das zweite Zahnrad (16B ... 16E) drehbeweglich um die zweite Welle (12) montiert ist, und dass es aufweist:
- ein erstes Reibungselement (38A), das in Drehung fest mit dem zweiten Zahnrad (16B ... 16E) verbunden ist und eine erste Reibungsfläche (39A) hat,
- ein zweites Reibungselement (38B), das in Drehung fest mit der zweiten Welle (12) verbunden ist und eine zweite Reibungsfläche (39B) hat, und
- Einrichtungen (40), um die erste und die zweite Reibungsfläche (39A, 39B) konstant in Reibungsbeziehung zueinander zu hallten, so dass die relativen Drehgeschwindigkeiten des zweiten Zahnrads (16B ... 16E) und der zweiten Welle (12) synchronisiert sind, wenn die Kupplungsklaue (28A, 28B, 28C) eingerückt ist.

2. Schaltgetriebe (10) nach Anspruch 1, **dadurch gekennzeichnet, dass** die erste und die zweite Reibungsfläche (39A, 39B) in direktem Kontakt miteinander sind.

3. Schaltgetriebe (10) nach Anspruch 2, **dadurch gekennzeichnet, dass** die erste und die zweite Reibungsfläche (39A, 39B) kegelstumpfförmig und koaxial zur Achse der zweiten Welle (12) sind.

4. Schaltgetriebe (10) nach Anspruch 3, **dadurch gekennzeichnet, dass** die erste Reibungsfläche (39A) entgegengesetzt zur Achse der zweiten Welle (12) ausgerichtet ist, während die zweite Reibungsfläche (39B) zu dieser Achse ausgerichtet ist.

5. Schaltgetriebe (10) nach einem der Ansprüche 1 bis 4, **dadurch gekennzeichnet, dass** jede der Reibungsflächen (39A, 39B) eine Projektion auf eine geometrische Ebene lotrecht zur Achse der zweiten Welle (12) ungleich Null hat.

6. Schaltgetriebe (10) nach einem der Ansprüche 1 bis 5, **dadurch gekennzeichnet, dass** die Halteeinrichtungen (40) eine Feder (41) aufweisen.

7. Schaltgetriebe (10) nach den Ansprüchen 5 und 6 zusammen gesehen, **dadurch gekennzeichnet, dass**:
- die Feder (41) sich parallel zur Achse der zweiten Welle (12) erstreckt,
- die Halteeinrichtungen (40) mindestens eine Kugel (42) für den Halt eines der Reibungselemente gegen das andere Reibungselement und ein Rückhaltebauteil (16F) aufweisen, das mit der zweiten Welle (12) in axialer Translationsverschiebung in Richtung entgegengesetzt zur Feder (41) fest verbunden ist, und
- die Feder (41) zwischen der oder jeder Kugel (42) und dem Rückhaltebauteil (16F) zusammengedrückt wird.

8. Schaltgetriebe (10) nach Anspruch 7, **dadurch gekennzeichnet, dass**:
- es eine Nabe (32B) aufweist, die gleitend auf die zweite Welle (12) montiert ist und eine Fläche (50) axialer Kraftübertragung aufweist, die ein axiales Rampenprofil hat, das zum Rückhaltebauteil (16F) hin ausgerichtet ist,
- das Rückhaltebauteil (16F) eine Fläche (46) axialer Führung der oder jeder Kugel (42) aufweist, und
- die oder jede Kugel (42) mit den Führungs- (46) und Kraftübertragungsflächen (50) in Kontakt steht.

9. Schaltgetriebe (10) nach Anspruch 5 und einem der Ansprüche 6 bis 8, **dadurch gekennzeichnet, dass** das erste und das zweite Zahnrad (16B ... 16E, 18B ... 18E) komplementäre spiralförmige Zahnungen aufweisen, die ausgerichtet sind, um eine axiale Kraft zu erzeugen, die das erste Reibungselement (38A) gegen das zweite Reibungselement (38B) drückt.
